# FASCICULE DE BREVET EUROPEEN

(11) **EP 3 658 287 B1**
(45) Date de publication et mention de la délivrance du brevet: **25.10.2023**
(21) Numéro de dépôt: 18759153.2
(22) Date de dépôt: 20.07.2018
(51) Int. Cl.: B02C 2/10, A47J 42/10, A47J 42/38

(54) **DISPOSITIF DE MOUTURE DE GRAINES ALIMENTAIRES ET MOULIN COMPORTANT UN TEL DISPOSITIF DE MOUTURE**
VORRICHTUNG ZUM MAHLEN VON NAHRUNGSMITTELKÖRNERN UND MÜHLE MIT EINER SOLCHEN MAHLVORRICHTUNG
DEVICE FOR GRINDING FOOD GRAINS AND MILL COMPRISING SUCH A GRINDING DEVICE

(30) Priorité: 28.07.2017 FR 1757174
(43) Date de publication de la demande: 03.06.2020
(73) Titulaire: Peugeot Saveurs, 25440 Quingey (FR)
(72) Inventeur: GOURAND, Thierry, 39380 Bans (FR); PERREY, Thibaud, 25770 Franois (FR)
(74) Mandataire: Littolff, Denis
(86) Numéro de dépôt international: PCT/FR2018/051873
(87) Numéro de publication internationale: WO 2019/020915

(56) Documents cités:
- EP-A1- 2 767 201
- DE-A1- 19 514 794
- US-A1- 2012 006 922

## Description

La présente invention a pour objet un dispositif de mouture de graines alimentaires, telles que notamment des graines de lin, au moyen d'un moulin, ledit dispositif de mouture comportant une poire présentant un sommet et une base, une cuvette d'allure annulaire présentant un bord supérieur et un bord inférieur, au sein de laquelle ladite poire est apte à être entraînée en rotation lors de l'actionnement du moulin au moyen d'une tige axiale, la poire et la cuvette délimitant entre elles un espace fonctionnel dont une zone supérieure comporte des moyens pour entraîner les graines vers une zone inférieure présentant une denture pour moudre lesdites graines formée par une première rangée de dents s'étendant sur une paroi externe de la poire, et une seconde rangée de dents s'étendant sur une paroi interne de la cuvette.

L'invention concerne par ailleurs un moulin pour moudre des graines alimentaires, tel que notamment des graines de lin, équipé d'un tel dispositif de mouture.

Du fait qu'elles présentent de nombreuses vertus nutritionnelles pour l'organisme, et qu'elles contribuent en outre à diversifier les saveurs et les textures dans nos assiettes en offrant du croquant qui séduit généralement les palais, les graines alimentaires connaissent aujourd'hui un succès grandissant auprès des consommateurs.

Il est toutefois de notoriété publique que certaines des graines proposées sur le marché, telles que notamment les graines de lin, possèdent une écorce trop résistante pour le système digestif humain. Afin de permettre une parfaite assimilation de leurs éléments nutritionnels contenus au coeur de la graine, et éviter qu'elles ne soient tout simplement évacuées intactes, sans que l'organisme n'ait pu profiter de tous leurs nutriments, il est par conséquent indispensable de casser finement leur écorce, en les broyant avant toute incorporation à un plat.

A l'heure actuelle, à défaut de disposer d'un appareil spécifiquement dédié à cette opération, les consommateurs l'effectuent généralement au moyen d'un mortier, ou au moyen d'un moulin à épices sèches de type classique.

La première solution s'avère fastidieuse, en particulier lorsque les quantités de graines à broyer sont importantes, et n'encourage par conséquent pas leur consommation.

Par ailleurs, il a été observé que le mécanisme de broyage dont sont équipés les moulins pour épices sèches se révèle incompatible avec le caractère gras que présente les graines alimentaires, et notamment les graines de lin. En effet, il s'avère que les graines glissent entre les dents inadaptées du mécanisme sans être broyées correctement, s'y agglutinent progressivement, ce qui conduit non seulement à un débit de sortie faible et donc des pertes de produit conséquentes mais également à un encrassement intempestif des moulins employés. Etant donné que ces derniers ne sont souvent pas facilement démontables, ceci a pour inconvénient que des résidus de graines partiellement broyées y restent inévitablement retenus, même après nettoyage, et finissent par y moisir et à devenir impropres à la consommation.

Par ailleurs, certains des mécanismes mis en oeuvre peuvent présenter des problèmes d'usure inopportune de leur denture, dus à un contact étroit entre les dents. Ceci a pour conséquence que des particules de matériau constitutif des dents risquent de se détacher lors du broyage des graines et de polluer la mouture obtenue aussi bien du point de vue esthétique que du point de vue qualitatif. De surcroît, ces particules de matériau peuvent se révéler nocifs en cas d'ingestion. Le document EP2767201A1 divulgue un dispositif de mouture de graines alimentaires selon le préambule de la revendication 1.

Le but de la présente invention est de proposer un dispositif spécifiquement étudié pour moudre des graines alimentaires, telles que notamment des graines de lin, au moyen d'un moulin, en vue à la fois de pallier le caractère fastidieux lié à l'utilisation d'un mortier et éviter l'ensemble des inconvénients évoqués ci-dessus liés à l'utilisation inappropriée d'un moulin à épices sèches de type classique.

En d'autres termes, le but de la présente invention est de proposer un dispositif permettant de moudre des graines alimentaires, telles que notamment des graines de lin, facilement, rapidement et efficacement, aussi bien du point de vue quantitatif que qualitatif, ce dispositif présentant en outre l'avantage de pouvoir être nettoyé méticuleusement sans avoir à recourir à des outils pour en démonter le mécanisme, de sorte à fournir durablement une mouture de fraîcheur irréprochable.

A cet effet, la présente invention concerne un dispositif de mouture du genre indiqué en préambule, caractérisé en ce qu'il comporte des moyens pour ménager, entre la poire et la cuvette, au niveau dudit espace fonctionnel, un jeu de dimension constante sur toute la hauteur dudit espace fonctionnel conçu apte à la fois à permettre le broyage desdites graines et éviter tout contact entre la poire et la cuvette au niveau dudit espace, et en ce que ledit espace est conformé pour empêcher toute remontée des graines depuis sa zone inférieure vers sa zone supérieure.

Grâce à une telle structure, le dispositif selon l'invention permet à la fois d'effectuer un parfait broyage des graines, d'augmenter le débit de sortie de la mouture, et d'éviter que des particules provenant d'un effritement intempestif des dents du mécanisme ne viennent souiller cette dernière.

Conformément à une caractéristique du dispositif selon l'invention, la dimension est préférentiellement supérieure ou égale à 0,1 mm et inférieure ou égale à l'épaisseur des graines à moudre, par exemple supérieure ou égale à 0,1 mm et inférieure ou égale à 0,4 mm.

Selon une variante de réalisation préférentielle, la paroi externe de la poire et la paroi interne de ladite cuvette présentent une allure tronconique sur l'ensemble de l'espace fonctionnel, et un angle de cône identique compris entre 6° et 10°, par exemple 8°.

La poire et la cuvette présente ainsi des faces à égale distance en tous points qui emprisonnent entre elles les graines alimentaires qui s'y introduisent progressivement, et les empêchent de remonter lors du mouvement de rotation de la poire dans la cuvette contrairement à ce que l'on observe lors de l'utilisation d'un mécanisme pour épices sèches classique.

L'invention prévoit par ailleurs que les moyens pour entraîner les graines vers une zone inférieure dudit espace fonctionnel peuvent comporter d'une part une pluralité de sillons hélicoïdaux présentant une extrémité de début et une extrémité de fin et s'étendant depuis le sommet de la poire autour de sa paroi externe, sur une longueur correspondant à une rotation de la poire comprise entre un quart de tour et trois quarts de tour, la profondeur des sillons diminuant progressivement entre leur extrémité de début et leur extrémité de fin, et d'autre part une pluralité de cannelures échelonnées sur la paroi interne de la cuvette, et s'étendant depuis son bord supérieur en direction de son bord inférieur.

De préférence, la longueur des sillons correspond à une rotation de la poire d'un demi-tour.

Par ailleurs, les cannelures sont de préférence prévues de manière telle que leur axe forme, avec une tangente du cercle défini par un bord supérieur ou inférieur de la cuvette, un angle α compris entre 85° et 95° et que leur profondeur diminue progressivement en direction du bord inférieur de la cuvette.

Une caractéristique additionnelle de l'invention est encore définie par le fait que la seconde rangée de dents s'étendant sur la paroi interne de la cuvette, comporte de préférence une pluralité de groupes identiques contenus chacun entre deux cannelures successives et formés de dents de hauteur différentes rangées par ordre de taille.

Une structure de l'espace fonctionnel présentant les caractéristiques indiquées ci-dessus permet avantageusement d'augmenter le débit de sortie de la mouture. Les sillons en forme d'hélice de la poire entraînent de force les graines alimentaires, emprisonnées entre les parois délimitant l'espace fonctionnel et empêchées de remonter, jusqu'aux petites dents de la zone inférieure de l'espace fonctionnel où elles sont broyées.

Une caractéristique avantageuse du dispositif selon l'invention est encore définie par le fait que la cuvette comporte un épaulement s'étendant entre son bord inférieur et sa paroi interne tandis que la poire comporte une pluralité d'ailettes s'étendant selon un axe radial autour de sa paroi externe au niveau de sa base, lesdites ailettes étant conçues aptes à reposer sur ledit épaulement et présentant une longueur ajustée à la profondeur de l'épaulement.

Avantageusement, les ailettes permettent à la fois d'effectuer un arrêt en translation de la poire dans la cuvette afin de garder un jeu fonctionnel entre la poire et la cuvette optimal et de racler la mouture pour l'évacuer progressivement et automatiquement de la cuvette à laquelle elle se colle inévitablement.

Conformément à une caractéristique additionnelle de l'invention, le présent dispositif de mouture comporte par ailleurs des moyens de solidarisation temporaire de ladite poire avec ladite cuvette, ce qui permet de procéder à leur démontage sans avoir à recourir à des outils spécifiques, puis à leur nettoyage.

Selon une variante de réalisation préférentielle, les moyens de solidarisation temporaire sont définis par une bride comportant une partie en forme de « U » présentant deux branches latérales et une branche transversale sur laquelle ladite poire est montée en rotation, les extrémités libres des deux branches latérales étant reliées par une bague s'étendant autour de ladite poire et dont le diamètre est ajusté à celui de la face externe de ladite cuvette, ladite bague et ladite cuvette comportant des moyens de blocage en position de ladite bride par rapport à ladite cuvette.

Ces derniers peuvent comporter au moins une paire de pattes s'étendant de manière diamétralement opposée vers l'intérieur de ladite bague sur son bord libre, et au moins une paire de rainures en « L » réalisées de manière diamétralement opposée, sur la face externe de ladite cuvette, entre son bord inférieur et une collerette bordant son bord supérieur, lesdites rainures comportant une première portion s'étendant perpendiculairement aux bords de la cuvette et une seconde portion s'étendant parallèlement à ladite collerette, et chacune desdites pattes comportant une encoche apte à coopérer avec un ergot s'étendant de manière appropriée dans la seconde portion d'une rainure.

L'invention a également pour objet un moulin pour moudre des graines alimentaires telles que notamment des graines de lin, caractérisé en ce qu'il comporte un dispositif de mouture comportant les caractéristiques indiquées ci-dessus solidaire d'un corps renfermant un logement pour stocker lesdites graines alimentaires à moudre.

Conformément à une variante de réalisation préférentielle, ledit corps comporte une portion supérieure en forme d'entonnoir dont la partie tubulaire présente un diamètre ajusté à celui de la paroi interne de la cuvette et une portion inférieure, de diamètre ajusté à celui de la collerette bordant le bord supérieur de la cuvette, et formant avec la portion supérieure un épaulement sur lequel ladite collerette peut être reliée par des moyens de fixation.

Le moulin selon l'invention présente comme caractéristique supplémentaire que ledit épaulement comporte au moins une nervure conformée pour coopérer avec une rainure de forme correspondante que comporte la face supérieure de ladite collerette.

L'invention sera mieux comprise, et d'autres caractéristiques et avantages de l'invention apparaîtront à la lumière de la description qui suit d'un exemple de réalisation donné à titre non limitatif. La description est à lire en relation avec les dessins annexés dans lesquels :
- La figure 1 illustre une vue éclatée d'un dispositif de mouture selon l'invention,
- La figure 2 illustre une vue en coupe longitudinale d'un moulin selon l'invention,
- La figure 3 est une vue éclatée en coupe longitudinale du moulin de la figure 2,
- La figure 4 est une vue en coupe partielle de la poire et de la cuvette du dispositif de mouture de la figure 1, en position emboîtée,
- La figure 5 est une vue agrandie du détail D de la figure 4,
- Les figures 6 et 7 sont des vues en perspective de dessous et de dessus de la cuvette du dispositif de mouture de la figure 1, et
- Les figures 8 et 9 sont des vues en perspective de dessous et de dessus de la poire du dispositif de mouture de la figure 1.

En référence aux figures, la présente invention concerne un dispositif de mouture 1 de graines alimentaires, telles que notamment des graines de lin, destiné à être monté dans un corps 11 d'un moulin 10.

Il comporte une cuvette 2 d'allure annulaire, une poire 3 apte à être entraînée en rotation dans ladite cuvette 2 au moyen d'une tige axiale 4 prolongeant son sommet 31, et une bride 5 de solidarisation de ladite poire 3 avec ladite cuvette 2.

Il convient de noter qu'indépendamment de la tige 4, prévue en métal, les différentes pièces constitutives du dispositif de mouture 1 sont préférentiellement fabriquées en un matériau plastique, par exemple de la famille des polyacétals (POM), ou en tout autre matériau présentant des caractéristiques équivalentes et qui soit compatible avec un usage alimentaire.

Le corps 11 du moulin 10 peut être fabriqué par exemple en bois, en matériau plastique, en verre, ou en tout autre matériau sélectionné notamment en fonction de l'aspect esthétique final recherché. Tel que visible aux figures, le corps 11 du moulin 10 renferme un logement supérieur 110 en forme d'entonnoir dont la partie tubulaire présente un diamètre ajusté à celui de la paroi interne 20 de la cuvette 2 et un logement inférieur 111, communiquant avec la partie tubulaire du logement supérieur 110, apte à héberger l'ensemble formé par la poire 3 et la cuvette 2. Le logement supérieur 110 est fermé par un chapeau 25 pouvant être enfilé sur la tige axiale 4 et fixé sur le corps 11 du moulin 10 par des moyens de fixation amovibles classiques tels que notamment des vis. Un bouton d'actionnement 26 engagé sur l'extrémité libre de la tige axiale 4 émergeant du chapeau 25 est également prévu.

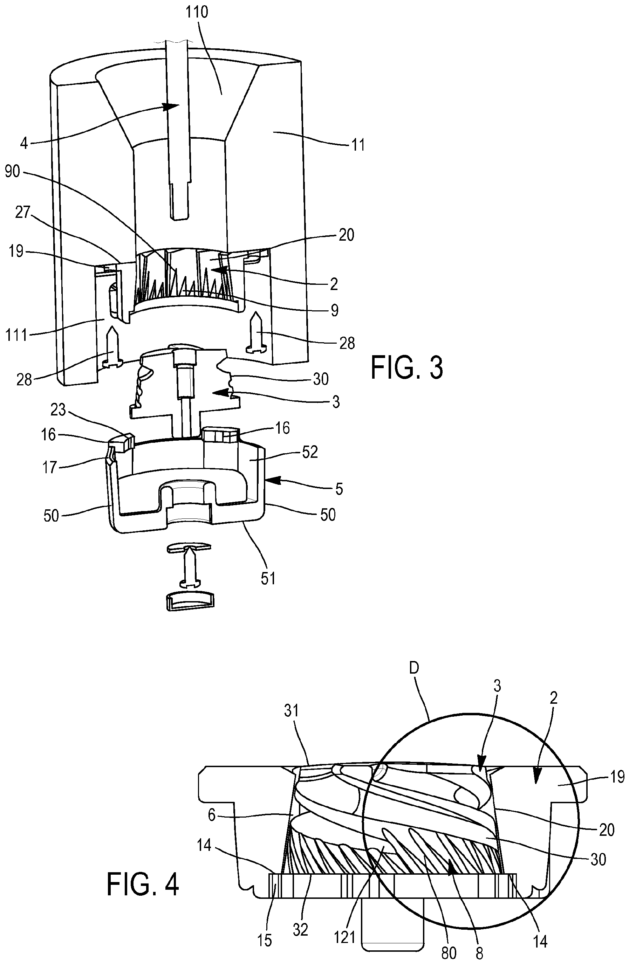

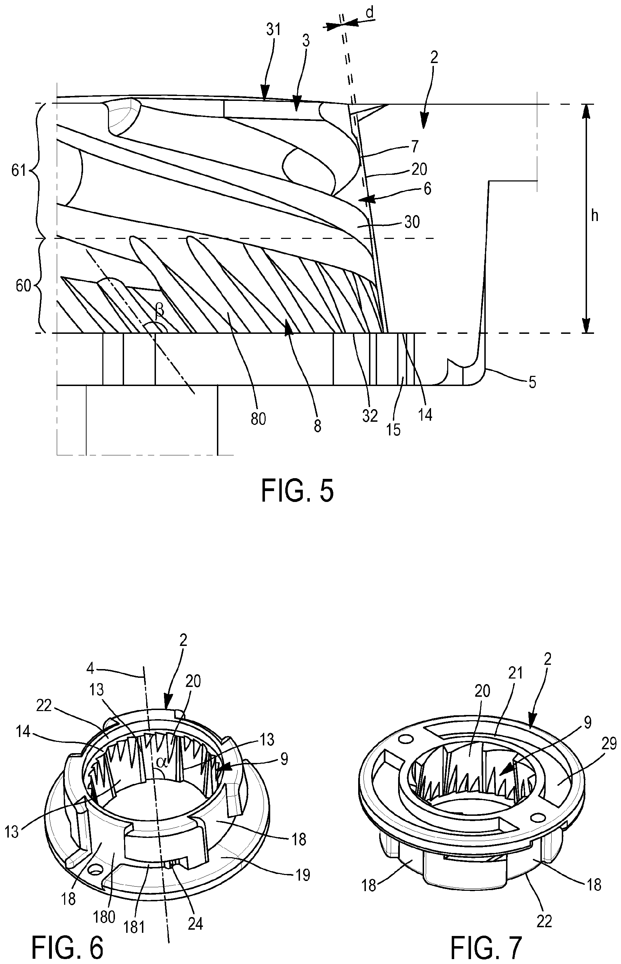

La poire 3 et la cuvette 2 sont conformées pour délimiter entre elles un espace fonctionnel 6 vers lequel les graines alimentaires contenues dans le corps 11 du moulin 10 sont entraînées par gravité pour y être broyées. En fait, l'espace fonctionnel 6 correspond au volume compris entre la paroi externe 30 de la poire 3 et la paroi interne 20 de la cuvette 2 et s'étendant entre le sommet 31 et la base 32 de la poire 3 (cf. figures 4 et 5). Il comporte une zone supérieure 61 conçue apte à provoquer un entraînement des graines alimentaires vers une zone inférieure 60 présentant une denture pour les moudre et qui est formée par une première rangée 8 de dents s'étendant sur la paroi externe 30 de la poire 3, et une seconde rangée 9 de dents s'étendant sur la paroi interne 20 de la cuvette 2.

Dans la variante de réalisation illustrée aux figures, la paroi externe 30 de la poire 3 et la paroi interne 20 de la cuvette 2 présentent une allure tronconique sur l'ensemble de l'espace fonctionnel 6, et un angle de cône identique, préférentiellement de l'ordre de 8°. Grâce à une telle structure, la dimension d du jeu fonctionnel 7 ménagé entre la poire 3 et la cuvette 2, au niveau de l'espace fonctionnel 6, est constante sur toute la hauteur h de ce dernier (cf. fig. 5). Il est précisé que le jeu fonctionnel 7 correspond à la distance comprise entre les arêtes des éléments saillants de la paroi externe 20 de la poire 3 et les arêtes des éléments saillants de la paroi interne 30 de la cuvette 2.

Le fait que la dimension d du jeu 7 soit constante permet de contribuer à garantir toute absence de contact entre la face externe 30 de la poire 3 et la face interne 20 de la cuvette 2 au niveau de l'espace fonctionnel 6, et par voie de conséquence d'éviter les problèmes d'effritement de matière observés avec certains moulins à épices sèches de l'art antérieur. De plus, cette caractéristique permet d'obtenir un emprisonnement des graines alimentaires entre lesdites parois externe 30 de la poire 3 et interne 20 de la cuvette 2, et donc d'empêcher qu'elles ne remontent de manière intempestive depuis la zone inférieure 60 de l'espace fonctionnel 6 vers sa zone supérieure 61.

Par ailleurs, conformément à une autre caractéristique de l'invention, le dispositif de mouture 1 est conçu de manière telle que la dimension d du jeu 7 soit supérieure ou égale à 0,1 mm et inférieure ou égale à l'épaisseur moyenne des graines à broyer, qui sont généralement fines et glissantes, par exemple inférieure ou égale à 0,2 mm lorsqu'il s'agit de graines de lin, de sorte que lesdites graines ne puissent quitter le dispositif intactes et que leur broyage soit garanti.

Par ailleurs, afin d'augmenter le débit de sortie de la mouture, la présente invention a prévu de conférer aux moyens que comporte la zone supérieure 61 pour entraîner les graines vers la zone inférieure 60 de l'espace fonctionnel 6 une structure spécifique.

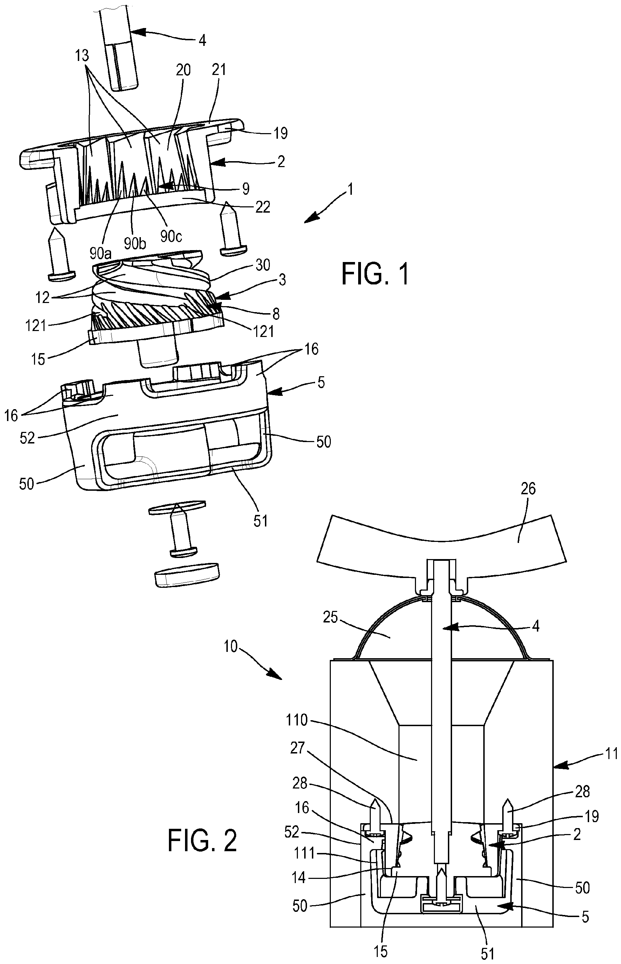

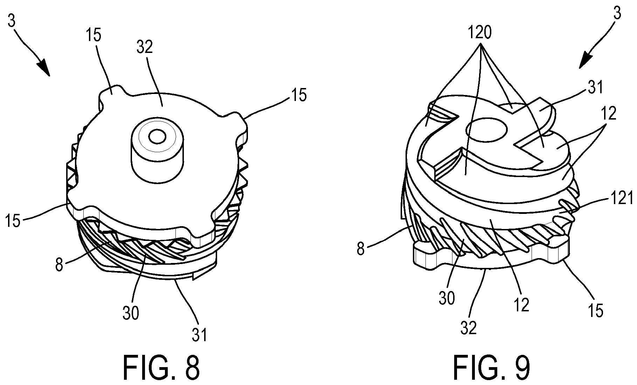

Ainsi, en référence notamment aux figures 1, 6 et 9, ces moyens d'entraînement comportent d'une part une pluralité de sillons hélicoïdaux 12, présentant une extrémité de début 120 et une extrémité de fin 121. Dans la variante de réalisation illustrée, les sillons hélicoïdaux 12 sont au nombre de quatre et s'étendent depuis le sommet 31 de la poire 3 autour de sa paroi externe 30, sur une longueur correspondant sensiblement à une rotation de la poire 3 d'un demi-tour, tandis que leur profondeur diminue progressivement entre leur extrémité de début 120 et leur extrémité de fin 121.

Les moyens d'entraînement comportent d'autre part une pluralité de cannelures 13, par exemple dix cannelures 13, échelonnées sur la paroi interne 20 de la cuvette 2, aptes à coopérer avec les sillons 12 de la poire 3, et s'étendant depuis le bord supérieur 21 en direction du bord inférieur 22 de la cuvette 2. Il est en outre à noter que l'axe Y des cannelures 13 forme, avec une tangente du cercle défini par un bord supérieur 21 ou inférieur 22 de la cuvette 2, un angle α compris entre 85° et 95°, tandis que leur profondeur diminue progressivement en direction du bord inférieur 22 de la cuvette 2.

Les moyens d'entraînement définis par les sillons 12 et les cannelures 13 permettent d'entraîner de force les graines alimentaires vers la zone inférieure 60 de l'espace fonctionnel 6. Comme indiqué ci-dessus, cette zone inférieure 60 comporte une première et une deuxième rangées 8, 9 de dents formées respectivement sur la paroi externe 30 de la poire 3 et la paroi interne 20 de la cuvette 2. Conformément à l'invention, la première rangée 8 comporte des dents 80 d'axe incliné d'un angle β compris entre 40° et 60° par rapport à une tangente au cercle défini par la base 32 de la poire 3. Par ailleurs, la seconde rangée 9 de dents 90 comporte une pluralité de groupes identiques, contenus chacun entre deux cannelures 13 successives, et formés de dents 90a, 90b, 90c, de hauteurs différentes, rangées par ordre de taille et d'axe d'allure parallèle à celui des cannelures 13.

Dans la variante de réalisation illustrée, la cuvette 2 comporte en outre un épaulement 14 s'étendant entre son bord inférieur 22 et sa paroi interne 20 tandis que la poire 3 comporte une pluralité d'ailettes 15 s'étendant selon un axe radial autour de sa paroi externe 30 au niveau de sa base 32. Lesdites ailettes 15 sont conçues aptes à reposer sur ledit épaulement 14 et présentent une longueur équivalente à la profondeur de ce dernier.

Grâce à une telle caractéristique, un arrêt en translation de la poire 3 et par conséquent son centrage par rapport à la cuvette 2 est obtenu, ce qui permet de contribuer à nouveau à éviter tout contact entre les dents 80 et 90 et en général entre les faces externe 30 et interne 20 de la poire 3 et de la cuvette 2. Par ailleurs, les ailettes 15 permettent également de racler la mouture éventuellement collée à l'épaulement 14.

De manière à permettre un nettoyage rapide et aisé du dispositif de mouture 1 selon l'invention, cette dernière a également prévu que ladite poire 3 et ladite cuvette 2 sont assemblées par des moyens de solidarisation temporaire ne nécessitant aucun outil pour leur démontage.

Dans la variante de réalisation illustrée, ces derniers sont définis par une bride 5, de préférence réalisée en un matériau flexible lui permettant de garantir un effort de maintien constant. La bride 5 comporte une partie en forme de « U » présentant deux branches latérales 50 et une branche transversale 51 sur laquelle la poire 3 est montée en rotation. Les extrémités libres des deux branches latérales 50 de la partie en forme de « U » supportent par ailleurs une bague 52 apte à s'étendre autour de la poire 3 et dont le diamètre est ajusté à celui de la face externe 20 de la cuvette 2. De plus, la bague 52 et la cuvette 2 comportent des moyens de blocage en position de la bague 52 par rapport à la cuvette 2.

Dans la variante illustrée, ces derniers comportent deux paires de pattes 16 s'étendant de manière diamétralement opposée vers l'intérieur de la bague 52 sur son bord libre 17, et deux paires de rainures en « L » 18 correspondantes réalisées de manière diamétralement opposée, sur la face externe 20 de la cuvette 2, entre son bord inférieur 22 et une collerette 19 bordant son bord supérieur 21. En fait, chaque rainure en « L » 18 comporte une première portion 180 s'étendant perpendiculairement aux bords 21, 22 de la cuvette 2 et une seconde portion 181 s'étendant parallèlement à la collerette 19. Chacune des pattes 16 comporte en outre une encoche 23 apte à coopérer avec un ergot 24 formé de manière appropriée dans la seconde portion 181 de chaque rainure 18 sous la collerette 19 (cf. figures 3, 6).

Ainsi, en pratique, la poire 3, munie de sa tige d'entraînement 4 est montée en rotation sur la branche transversale 51 de la bride 5. La cuvette 2 est fixée à demeure dans le logement inférieur 111 du corps 11 du moulin 10. Après son introduction dans le corps 11 du moulin 10 depuis le logement inférieur 111 de celui-ci, l'ensemble constitué par la poire 3, la tige 4 et la bride 5 est rendu solidaire de la cuvette 2, en faisant d'abord coulisser les pattes 16 de la bague 52 de la bride 5 dans la portion 180 des rainures en « L » 18, puis après une rotation dudit ensemble, en engageant sur la base d'un emboîtement élastique réversible l'encoche 23 de chaque patte 16 sur un ergot 24 de la partie 181 de chaque rainure 18.

Pour désolidariser la poire 3 de la cuvette 2 fixée dans le corps 11 du moulin et permettre un nettoyage approfondi de ces pièces après leur utilisation, par exemple par brossage, il suffit à l'utilisateur, après avoir retiré le bouton d'actionnement de la tige 4 et s'être assuré que le corps 11 est vidé, de retourner ledit moulin 10 en tenant son corps dans une de ses mains. Puis, il lui suffit de saisir avec son autre main la barre transversale 51 de la bride 5, pour opérer d'abord un pivotement de l'ensemble formé par la bride 5, la poire 3 et la tige 4 et désengager les encoches 23 des ergots 24, puis un coulissement dudit ensemble en vue de l'extraire dudit corps 11.

A ce propos, il convient encore de préciser que dans la variante de réalisation illustrée, le logement inférieur 111 que renferme le corps 11 du moulin 10 est tubulaire, présente un diamètre ajusté à celui de la collerette 19 bordant le bord supérieur 22 de la cuvette 2, et forme avec le logement supérieur 110 un épaulement 27 sur lequel ladite collerette 19 peut être reliée fixement par des moyens de fixation appropriés tels que par exemple des vis 28. Par ailleurs la stabilité de l'assemblage entre la cuvette 2 et le corps 11 du moulin 10 peut encore être améliorée en prévoyant d'équiper l'épaulement 27 dudit corps 10 d'au moins une nervure (non illustrée) conformée pour coopérer avec une rainure 29 de forme correspondante que comporte la face supérieure de la collerette 19.

## Revendications

1. Dispositif (1) de mouture de graines alimentaires, telles que notamment des graines de lin, au moyen d'un moulin (10), ledit dispositif de mouture comportant une poire (3) présentant un sommet (31) et une base (32), une cuvette (2) d'allure annulaire présentant un bord supérieur (21) et un bord inférieur (22), au sein de laquelle ladite poire (3) est apte à être entraînée en rotation lors de l'actionnement du moulin au moyen d'une tige axiale (4), la poire (3) et la cuvette (2) délimitant entre elles un espace fonctionnel (6) dont une zone supérieure (61) comporte des moyens pour entraîner les graines vers une zone inférieure (60) présentant une denture pour moudre lesdites graines formée par une première rangée (8) de dents (80) s'étendant sur une paroi externe (30) de la poire (3), et une seconde rangée (9) de dents (90) s'étendant sur une paroi interne (20) de la cuvette (2), ledit espace (6) étant conformé pour empêcher toute remontée des graines depuis sa zone inférieure (60) vers sa zone supérieure (61), **caractérisé en ce qu'**il comporte des moyens pour ménager, entre la poire (3) et la cuvette (2), au niveau dudit espace fonctionnel (6), un jeu (7) de dimension constante sur toute la hauteur dudit espace fonctionnel (6) conçu apte à la fois à permettre le broyage desdites graines et éviter tout contact entre la poire (3) et la cuvette (2) au niveau dudit espace (6).

2. Dispositif (1) selon la revendication 1, caractérisé en que la dimension d du jeu fonctionnel (7) est supérieure ou égale à 0,1 mm et inférieure ou égale à l'épaisseur des graines alimentaires à moudre.

3. Dispositif (1) selon l'une quelconque des revendications précédentes, **caractérisé en ce que** la paroi externe (30) de la poire (3) et la paroi interne (20) de la cuvette (2) présentent une allure tronconique sur l'ensemble de l'espace fonctionnel (7), et un angle de cône identique compris entre 6° et 10°.

4. Dispositif (1) selon l'une quelconque des revendications précédentes, **caractérisé en ce que** les moyens pour entraîner les graines vers la zone inférieure (61) dudit espace fonctionnel (6) comportent d'une part une pluralité de sillons hélicoïdaux (12) présentant une extrémité de début (120) et une extrémité de fin (121) et s'étendant depuis le sommet (31) de la poire (3) autour de sa paroi externe (30), sur une longueur correspondant à une rotation de la poire (3)comprise entre un quart de tour et trois quarts de tour, la profondeur des sillons (12) diminuant progressivement entre leur extrémité de début (120) et leur extrémité de fin (121), et d'autre part une pluralité de cannelures (13) échelonnées sur la paroi interne (20) de la cuvette (2), et s'étendant depuis son bord supérieur (21) en direction de son bord inférieur (22).

5. Dispositif (1) selon la revendication 4, **caractérisé en ce que** la longueur des sillons (12) correspond à une rotation de la poire (3) d'un demi-tour.

6. Dispositif (1) selon l'une quelconque des revendications 4 ou 5, **caractérisé en ce que** l'axe (Y) des cannelures (13) forme, avec une tangente du cercle défini par un bord supérieur (21) ou inférieur (21) de la cuvette (2), un angle α compris entre 85° et 90°, tandis que leur profondeur diminue progressivement en direction du bord inférieur (22) de la cuvette (2) .

7. Dispositif (1) selon l'une quelconque des revendications précédentes, **caractérisé en ce que** la seconde rangée (9) de dents (90) s'étendant sur la paroi interne (20) de la cuvette (2), comporte une pluralité de groupes identiques contenus chacun entre deux cannelures (13) successives et formés de dents (90a, 90b, 90c) de hauteurs différentes rangées par ordre de taille.

8. Dispositif (1) selon l'une quelconque des revendications précédentes, **caractérisé en ce que** la cuvette (2) comporte un épaulement (14) s'étendant entre son bord inférieur (22) et sa paroi interne (20) tandis que la poire (3) comporte une pluralité d'ailettes (15) s'étendant selon un axe radial autour de sa paroi externe (30) au niveau de sa base (32), lesdites ailettes (15) étant conçues aptes à reposer sur ledit épaulement (14) et présentant une longueur 1 ajustée à la profondeur dudit épaulement (14).

9. Dispositif (1) selon l'une quelconque des revendications précédentes, **caractérisé en ce qu'**il comporte des moyens de solidarisation temporaire de ladite poire (3) avec ladite cuvette (2).

10. Dispositif (1) selon la revendication 9, **caractérisé en ce que** les moyens de solidarisation temporaire sont définis par une bride (5) comportant une partie en forme de « U » présentant deux branches latérales (50) et une branche transversale (51) sur laquelle ladite poire (3) est montée en rotation, les extrémités libres des deux branches latérales (50) supportant une bague (52) conçue apte à s'étendre autour de ladite poire (3) et dont le diamètre est ajusté à celui de la face externe (20) de ladite cuvette (2), ladite bague (52) et ladite cuvette (2) comportant des moyens de blocage en position de ladite bride (5) par rapport à ladite cuvette (2).

11. Dispositif (1) selon la revendication 10, **caractérisé en ce que** les moyens de blocage en position de ladite bride (5) par rapport à ladite cuvette (2) comportent au moins une paire de pattes (16) s'étendant de manière diamétralement opposée vers l'intérieur de ladite bague (52) sur son bord libre (17), et au moins une paire de rainures en « L » (18) réalisées de manière diamétralement opposée, sur la face externe (20) de ladite cuvette (2), entre son bord inférieur (22) et une collerette (19) bordant son bord supérieur (21), lesdites rainures en « L » (18) comportant une première portion (180) s'étendant perpendiculairement aux bords (21, 22) de la cuvette (2) et une seconde portion (181) s'étendant parallèlement à ladite collerette (19), chacune desdites pattes (16) comportant une encoche (23) apte à coopérer avec un ergot (24) s'étendant de manière appropriée dans la seconde portion (181) d'une rainure (18).

12. Moulin (10) pour moudre des graines alimentaires telles que notamment des graines de lin, **caractérisé en ce qu'**il comporte un dispositif (1) de mouture selon l'une quelconque des revendications précédentes solidaire d'un corps (11) renfermant un logement (110) pour stocker lesdits graines alimentaires à moudre.

13. Moulin (1) selon la revendication 12, **caractérisé en ce que** ledit corps (10) comporte un logement supérieure (110) en forme d'entonnoir dont la partie tubulaire présente un diamètre ajusté à celui de la paroi interne (20) de la cuvette (2) et un logement inférieur (111), de diamètre ajusté à celui de la collerette (19) bordant le bord supérieur (21) de la cuvette (2), et formant avec le logement supérieur (110) un épaulement (27) sur lequel ladite collerette (19) peut être reliée par des moyens de fixation.

14. Moulin (10) selon la revendication 13, **caractérisé en ce que** ledit épaulement (27) comporte au moins une nervure conformée pour coopérer avec une rainure (29) de forme correspondante que comporte la face supérieure de ladite collerette (19).

## Patentansprüche

1. Vorrichtung (1) zum Mahlen von Nahrungsmittelsamen, wie zum Beispiel insbesondere Leinsamen, mittels einer Mühle (10), wobei die Mahlvorrichtung ein Kegelmahlteil (3), das eine Spitze (31) und eine Basis (32) vorweist, eine Schale (2) mit ringförmigem Aussehen aufweist, die einen oberen Rand (21) und einen unteren Rand (22) vorweist, innerhalb der das Kegelmahlteil (3) geeignet ist, um bei der Betätigung der Mühle mittels einer axialen Stange (4) drehend angetrieben zu werden, wobei das Kegelmahlteil (3) und die Schale (2) zwischen sich einen funktionellen Raum (6) begrenzen, dessen obere Zone (61) Mittel zum Antreiben der Samen zu einer unteren Zone (60) aufweist, die eine Zahnung zum Mahlen der Samen vorweist, die durch eine erste Reihe (8) von Zähnen (80), die sich auf einer Außenwand (30) des Kegelmahlteils (3) erstrecken, und eine zweite Reihe (9) von Zähnen (90) ausgebildet ist, die sich auf einer Innenwand (20) der Schale (2) erstrecken, wobei der Raum (6) zum Verhindern jeglichen Aufstiegs von Samen von seiner unteren Zone (60) zu seiner oberen Zone (61) gestaltet ist, **dadurch gekennzeichnet, dass** sie Mittel zum Anordnen, zwischen dem Kegelmahlteil (3) und der Schale (2), an dem funktionellen Raum (6), eines Spiels (7) mit konstanter Abmessung auf der gesamten Höhe des funktionellen Raums (6) aufweist, das ausgelegt ist, um geeignet zu sein, um zugleich die Zerkleinerung der Samen zu ermöglichen und jeglichen Kontakt zwischen dem Kegelmahlteil (3) und der Schale (2) an dem funktionellen Raum (6) zu vermeiden.

2. Vorrichtung (1) nach Anspruch 1, **dadurch gekennzeichnet, dass** die Abmessung d des funktionellen Spiels (7) größer als oder gleich 0,1 mm und kleiner als oder gleich der Dicke der zu mahlenden Nahrungsmittelsamen ist.

3. Vorrichtung (1) nach einem der vorstehenden Ansprüche,
**dadurch gekennzeichnet, dass** die Außenwand (30) des Kegelmahlteils (3) und die Innenwand (20) der Schale (2) ein kegelstumpfförmiges Aussehen über den gesamten funktionellen Raum (7) und einen identischen Konuswinkel zwischen 6° und 10° vorweisen.

4. Vorrichtung (1) nach einem der vorstehenden Ansprüche,
**dadurch gekennzeichnet, dass** die Mittel zum Antreiben der Samen zu der unteren Zone (61) des funktionellen Raums (6) einerseits eine Vielzahl von spiralförmigen Furchen (12), die ein Anfangsende (120) und ein Abschlussende (121) vorweisen und sich von der Spitze (31) des Kegelmahlteils (3) um seine Außenwand (30) herum auf einer Länge erstrecken, die einer Drehung des Kegelmahlteils (3) zwischen einer Viertelumdrehung und einer Dreiviertelumdrehung entspricht, wobei die Tiefe der Furchen (12) zwischen ihrem Anfangsende (120) und ihrem Abschlussende (121) schrittweise abnimmt, und andererseits eine Vielzahl von Rillen (13) aufweisen, die an der Innenwand (20) der Schale (2) gestaffelt sind und sich von ihrem oberen Rand (21) in Richtung ihres unteren Rands (22) erstrecken.

5. Vorrichtung (1) nach Anspruch 4, **dadurch gekennzeichnet, dass** die Länge der Furchen (12) einer Drehung des Kegelmahlteils (3) um eine halbe Umdrehung entspricht.

6. Vorrichtung (1) nach einem der Ansprüche 4 oder 5,
**dadurch gekennzeichnet, dass** die Achse (Y) der Rillen (13) mit einer Tangente des Kreises, der durch einen oberen (21) oder unteren (21) Rand der Schale (2) definiert ist, einen Winkel α zwischen 85° und 90° ausbildet, während ihre Tiefe in Richtung des unteren Rands (22) der Schale (2) schrittweise abnimmt.

7. Vorrichtung (1) nach einem der vorstehenden Ansprüche,
**dadurch gekennzeichnet, dass** die zweite Reihe (9) von Zähnen (90), die sich auf der Innenwand (20) der Schale (2) erstrecken, eine Vielzahl von identischen Gruppen aufweist, die jeweils zwischen Rillen (13) enthalten sind, die aufeinanderfolgend und mit Zähnen (90a, 90b, 90c) mit unterschiedlichen Höhen ausgebildet sind, die nach Größenordnung eingereiht sind.

8. Vorrichtung (1) nach einem der vorstehenden Ansprüche,
**dadurch gekennzeichnet, dass** die Schale (2) einen Absatz (14) aufweist, der sich zwischen ihrem unteren Rand (22) und ihrer Innenwand (20) erstreckt, während das Kegelmahlteil (3) eine Vielzahl von Rippen (15) einschließt, die sich entlang einer radialen Achse um seine Außenwand (30) herum an seiner Basis (32) erstrecken, wobei die Rippen (15) so ausgelegt sind, dass sie geeignet sind, um auf dem Absatz (14) zu ruhen, und eine Länge 1 vorweisen, die an die Tiefe des Absatzes (14) angepasst ist.

9. Vorrichtung (1) nach einem der vorstehenden Ansprüche,
**dadurch gekennzeichnet, dass** sie Mittel zum temporären festen Verbinden des Kegelmahlteils (3) mit der Schale (2) aufweisen.

10. Vorrichtung (1) nach Anspruch 9, **dadurch gekennzeichnet, dass** die Mittel zum temporären festen Verbinden durch einen Flansch (5) definiert sind, der einen "U"-förmigen Teil aufweist, der zwei Seitenschenkel (50) und einen Querschenkel (51) vorweist, auf dem das Kegelmahlteil (3) drehbar montiert ist, wobei die freien Enden der zwei Seitenschenkel (50) einen Ring (52) tragen, der ausgelegt ist, um geeignet zu sein, um sich um das Kegelmahlteil (3) herum zu erstrecken, und dessen Durchmesser an den der Außenseite (20) der Schale (2) angepasst ist, wobei der Ring (52) und die Schale (2) Mittel zum Blockieren des Flansches (5) in Position relativ zu der Schale (2) aufweisen.

11. Vorrichtung (1) nach Anspruch 10, **dadurch gekennzeichnet, dass** die Mittel zum Blockieren des Flansches (5) in Position relativ zu der Schale (2) mindestens ein Paar Laschen (16), die sich auf diametrale gegenüberliegende Weise zu der Innenseite des Rings (52) auf seinem freien Rand (17) erstrecken, und mindestens ein Paar von "L"-Nuten (18), die auf diametral gegenüberliegende Weise ausgeführt sind, auf der Außenfläche (20) der Schale (2) zwischen ihrem unteren Rand (22) und einem Kragen (19) aufweisen, der ihren oberen Rand (21) einfasst, wobei die "L"-Nuten (18) einen ersten Abschnitt (180), der sich senkrecht zu den Rändern (21, 22) der Schale (2) erstreckt, und einen zweiten Abschnitt (181) aufweisen, der sich parallel zu dem Kragen (19) erstreckt, wobei jede der Laschen (16) eine Kerbe (23) aufweist, die geeignet ist, um mit einem Vorsprung (24) zusammenzuwirken, der sich auf passende Weise in dem zweiten Abschnitt (181) einer Nut (18) erstreckt.

12. Mühle (10) zum Mahlen von Nahrungsmittelsamen wie zum Beispiel Leinsamen, **dadurch gekennzeichnet, dass** sie eine Mahlvorrichtung (1) nach einem der vorstehenden Ansprüche umfasst, die mit einem Körper (11) fest verbunden ist, der ein Gehäuse (110) zum Aufbewahren der Nahrungsmittelsamen verschließt.

13. Mühle (1) nach Anspruch 12, **dadurch gekennzeichnet, dass** der Körper (10) ein trichterförmiges oberes Gehäuse (110), dessen rohrförmiger Teil einen Durchmesser vorweist, der an den der Innenwand (20) der Schale (2) angepasst ist, und ein unteres Gehäuse (111) mit einem Durchmesser aufweist, der an den des Kragens (19) angepasst ist, der an den oberen Rand (21) der Schale (2) angrenzt, und das mit dem oberen Gehäuse (110) einen Absatz (27) ausbildet, auf dem der Kragen (19) durch Befestigungsmittel verbunden werden kann.

14. Mühle (10) nach Anspruch 13, **dadurch gekennzeichnet, dass** der Absatz (27) mindestens eine Sicke aufweist, die zum Zusammenwirken mit einer Nut (2 9) mit entsprechender Form gestaltet ist, die von der Oberseite des Kragens (19) aufgewiesen ist.

## Claims

1. A device (1) for grinding food grains, such as in particular flaxseed grains, by means of a mill (10), said grinding device including a bulb (3) having a top (31) and a base (32), an annular bowl (2) having an upper edge (21) and a lower edge (22), within which said bulb (3) is able to be driven in rotation during the actuation of the mill by means of an axial rod (4), the bulb (3) and the bowl (2) delimiting between them a functional space (6), an upper area (61) of which includes means for driving the grains toward a lower area (60) having a gearing for grinding said grains which is formed by a first row (8) of teeth (80) extending over an outer wall (30) of the bulb (3), and a second row (9) of teeth (90) extending over an inner wall (20) of the bowl (2), said space (6) being formed so as to prevent any grains from returning from its lower area (60) to its upper area (61), **characterized in that** it comprises means for arranging, between the bulb (3) and the bowl (2), at said functional space (6), a clearance (7) of constant dimension over the entire height of said functional space (6) designed to be able both to allow the grinding of said grains and to avoid any contact between the bulb (3) and the bowl (2) at said space (6).

2. The device (1) according to claim 1, **characterized in that** the dimension d of the clearance (7) is greater than or equal to 0.1 mm and less than or equal to the thickness of the food grains to be ground.

3. The device (1) according to any one of the preceding claims,
**characterized in that** the outer wall (30) of the bulb (3) and the inner wall (20) of the bowl (2) have a frustoconical shape over the entire functional space (7), and an identical cone angle of between 6° and 10°.

4. The device (1) according to any one of the preceding claims,
**characterized in that** the means for driving the grains toward the lower area (61) of said functional space (6) include on the one hand a plurality of helical grooves (12) having a starting end (120) and a terminating end (121) and extending from the top (31) of the bulb (3) around its outer wall (30), over a length corresponding to one rotation of the bulb (3) between a quarter turn and a three-quarter turn, wherein the depth of the grooves (12) decreases progressively between their starting end (120) and their terminating end (121), and on the other hand a plurality of splines (13) staggered over the inner wall (20) of the bowl (2), and extending from its upper edge (21) toward its lower edge (22).

5. The device (1) according to claim 4, **characterized in that** the length of the grooves (12) corresponds to one rotation of the bulb (3) by a half-turn.

6. The device (1) according to any of claims 4 or 5, **characterized in that** the axis (Y) of the splines (13) forms, with a tangent of the circle defined by an upper edge (21) or a lower edge (21) of the bowl (2), an angle α between 85° and 90°, while their depth decreases progressively toward the lower edge (22) of the bowl (2).

7. The device (1) according to any one of the preceding claims,
**characterized in that** the second row (9) of teeth (90) extending over the inner wall (20) of the bowl (2) includes a plurality of identical groups each contained between two successive splines (13) and formed by teeth (90a, 90b, 90c) of different heights, ordered by size.

8. The device (1) according to any one of the preceding claims,
**characterized in that** the bowl (2) includes a shoulder (14) extending between its lower edge (22) and its inner wall (20) while the bulb (3) includes a plurality of fins (15) extending along a radial axis around its outer wall (30) at its base (32), said fins (15) being designed to be able to rest on said shoulder (14) and having a length I adjusted to the depth of said shoulder (14).

9. The device (1) according to any one of the preceding claims,
**characterized in that** it includes means for temporarily securing said bulb (3) to said bowl (2).

10. The device (1) according to claim 9, **characterized in that** the temporary securing means are defined by a flange (5) including a U-shaped part having two lateral branches (50) and a transverse branch (51) on which said bulb (3) is mounted in rotation, the free ends of the two lateral branches (50) supporting a ring (52) designed to extend around said bulb (3) and the diameter of which is adjusted to that of the outer face (20) of said bowl (2), said ring (52) and said bowl (2) including means for locking said flange (5) in position relative to said bowl (2).

11. The device (1) according to claim 10, **characterized in that** the means for locking said flange (5) in position relative to said bowl (2) include at least one pair of tabs (16) extending diametrically opposite toward the inside of said ring (52) on its free edge (17), and at least one pair of diametrically opposite L-shaped grooves (18) on the outer face (20) of said bowl (2), between its lower edge (22) and a collar (19) bordering its upper edge (21), said L-shaped grooves (18) including a first portion (180) extending perpendicular to the edges (21, 22) of the bowl (2) and a second portion (181) extending parallel to said collar (19), each of said tabs (16) comprising a notch (23) able to cooperate with a lug (24) which extends appropriately in the second portion (181) of a groove (18).

12. A mill (10) for grinding food grains such as in particular flaxseed grains, **characterized in that** it includes a grinding device (1) according to any one of the preceding claims secured to a body (11) containing a housing (110) for storing said food grains to be ground.

13. The mill (1) according to claim 12, **characterized in that** said body (10) includes an upper housing (110) in the shape of a funnel, the tubular part of which has a diameter adjusted to that of the inner wall (20) of the bowl (2) and a lower housing (111), with a diameter adjusted to that of the collar (19) bordering the upper edge (21) of the bowl (2), and forming, with the upper housing (110), a shoulder (27) on which said collar (19) can be connected by attachment means.

14. The mill (10) according to claim 13, **characterized in that** said shoulder (27) includes at least one rib shaped to cooperate with a slot (29) of corresponding shape included in the upper face of said collar (19).
